(19) Europäisches Patentamt
European Patent Office
Office européen des brevets

(11) **EP 3 703 329 B1**

(12) **EUROPEAN PATENT SPECIFICATION**

(45) Date of publication and mention
of the grant of the patent:
**20.03.2024 Bulletin 2024/12**

(21) Application number: **18871133.7**

(22) Date of filing: **24.10.2018**

(51) International Patent Classification (IPC):
**H04L 9/40** *(2022.01)*

(52) Cooperative Patent Classification (CPC):
**H04L 63/1466; H04L 63/1408; H04L 63/1416;
H04L 63/1433; H04L 63/1483;** H04L 41/145

(86) International application number:
**PCT/CN2018/111599**

(87) International publication number:
**WO 2019/080860 (02.05.2019 Gazette 2019/18)**

(54) **WEBPAGE REQUEST IDENTIFICATION**

IDENTIFIZIERUNG VON WEBSEITENANFRAGEN

IDENTIFICATION DE REQUÊTE DE PAGE WEB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2017 CN 201711013266**

(43) Date of publication of application:
**02.09.2020 Bulletin 2020/36**

(73) Proprietor: **New H3C Security Technologies Co.,
Ltd.**
**Hefei, Anhui 230001 (CN)**

(72) Inventors:
• **JIA, Ruoran**
**Beijing 100085 (CN)**
• **GU, Chengjie**
**Beijing 100085 (CN)**

(74) Representative: **Zimmermann & Partner
Patentanwälte mbB
Postfach 330 920
80069 München (DE)**

(56) References cited:
**EP-A1- 3 018 879       WO-A1-2017/115272
CN-A- 103 309 862       CN-A- 103 309 862
CN-A- 105 183 784       CN-A- 105 956 472
CN-A- 105 956 472       CN-A- 106 685 936
US-A1- 2017 134 397**

• **NOUH MARIAM ET AL: "Towards Designing a
Multipurpose Cybercrime Intelligence
Framework", 2016 EUROPEAN INTELLIGENCE
AND SECURITY INFORMATICS CONFERENCE
(EISIC), IEEE, 17 August 2016 (2016-08-17), pages
60-67, XP033073778, DOI:
10.1109/EISIC.2016.018 [retrieved on 2017-03-02]**

## Description

## BACKGROUND

With the development of Internet technology, various network services facilitate people's lives, but also provide attackers with more opportunities for attacks. A malicious web page request is an attack form used by an attacker. The malicious web page request utilizes vulnerabilities of the network services to attack a network server, through questionnaire uploading, cross-site scripting, HTTP (HyperText Transfer Protocol) request spoofing, SQL (Structured Query Language) injection, and the like, so as to achieve the purposes of stealing information, disabling web services, etc.

In order to improve network security and ensure network service quality, it is required to accurately identify malicious web page requests. At present, an identification of a web page request is mainly implemented by using a hidden Markov model. This implementation specifically includes: obtaining a sample web page request, wherein the sample web page request may be a malicious web page request or a non-malicious web page request; converting text information of the sample web page request into a form of a state; for each state, making a statistics on a probability that a state after this state is a certain state, for example, a probability that a state after "today" state is "weather" state, a probability that a state after "today" state is "meal" state, and the like, so as to determine probability distribution of a state after each state; constructing a state transition model according to the determined probability distribution, that is, a web page request identification model; determining a probability that a web page request to be identified is a non-malicious web page and a probability that a web page request to be identified is a malicious web page request through the web page request identification model; if the probability of the non-malicious web page request is greater than the probability of the malicious web page request, determining that the web page request to be identified is a non-malicious web page request; and if the probability of the non-malicious web page request is not greater than the malicious web page, determining that the web page request to be identified is a malicious web page request.

Also, in the prior art there are known some methods or devices as described in their respective documents.

The publication CN105956472A discloses a method for identifying whether a webpage includes malicious content or not, comprising the following steps: resolving a URL (Uniform Resource Locator) of a webpage to be identified to extract a URL feature from the URL in order to generate a first feature set; generating a first feature vector according to the first feature set; and processing the first feature vector by using a first feature model, and outputting a first result in order to represent whether the webpage to be identified includes the malicious content or not.

Nouh Mariam et al, in "Towards Designing a Multipurpose Cybercrime Intelligence Framework", 2016 EUROPEAN INTELLIGENCE AND SECURITY INFORMATICS CONFERENCE (EISIC), IEEE, 17 AUGUST 2016, pages 60-67, XP033073778, study the broad state-of-the-art research in cybercrime intelligence in order to identify existing research gaps; and designs and develops a multipuprpose framework that is able to fill these gaps using a wide range of techniques.

The publication CN103309862A discloses a webpage type recognition method and system. The method comprises the following steps of calculating a content type alignment value of a webpage according to the contextual content of the webpage; extracting the webpage structural characteristics of the webpage; and utilizing the content type alignment value and the webpage structural characteristics to recognize a type of the webpage.

The publication CN106685936A discloses a webpage defacement detection method. The method includes the following steps: obtaining a text characteristic vector of a webpage to be detected and a text characteristic vector of a website to which the webpage to be detected belongs; calculating text similarity between the webpage to be detected and the website on the basis of the obtained text characteristic vector of the webpage to be detected and the text characteristic vector of the website; determining whether the text similarity is smaller than a preset threshold value; and if the text similarity is smaller than the preset threshold value, determining that the webpage to be detected is a defaced webpage. The invention also discloses a webpage defacement detection apparatus. The webpage defacement detection accuracy and efficiency can be improved.

## SUMMARY

The objective of the present disclosure are solved with the features of independent claims. Further embodiments are defined in the dependent claims.

## BRIEF DESCRIPTION OF THE DRAWINGS

In order to more clearly describe the technical solutions in the present disclosure and in the prior art, drawings that need to be used in examples and the prior art will be briefly described below. Obviously, the drawings provided below are for only some examples of the present disclosure; those skilled in the art can also obtain other drawings based on these drawings without any creative efforts.

FIG. 1 is a schematic flowchart of a method for identifying a web page request provided by an example of the present disclosure;

FIG. 2 is a schematic structural diagram of an apparatus for identifying a web page request provided by an example of the present disclosure;

FIG. 3 is a schematic structural diagram of an electronic device provided by an example of the present disclosure.

## DETAILED DESCRIPTION

The technical solutions in the examples of the present disclosure will be clearly and completely described in combination with the drawings in the examples of the present disclosure. Obviously, the described examples are only some, and not all, of the examples of the present disclosure. All other examples obtained based on the examples of the present disclosure by those skilled in the art without any creative efforts fall into the scope of protection defined by the present disclosure.

At present, the identification of a web page request is mainly implemented by using a hidden Markov model. However, when the hidden Markov model is used to identify a web page request, only text information of the web page request is considered, which causes the lower accuracy of the identification of the web page request.

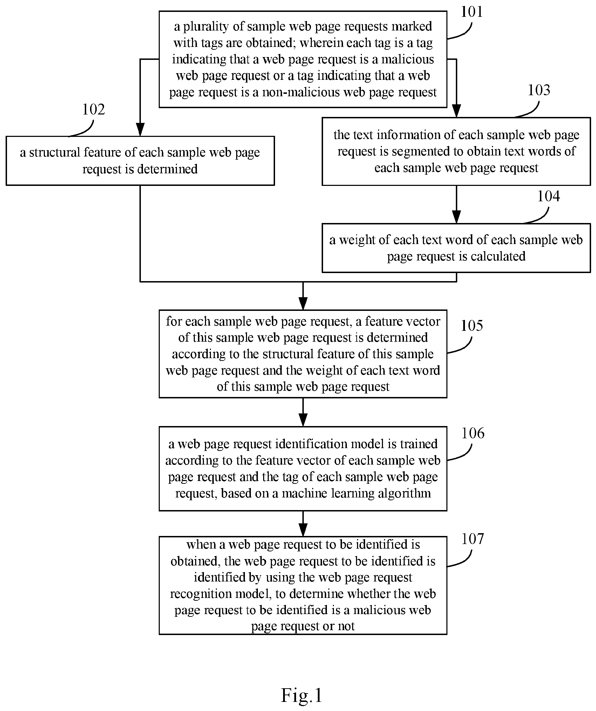

In order to improve the accuracy of the identification of the web page request, an example of the present disclosure provides a method for identifying a web page request. The method for identifying a web page request may be applicable to any electronic device. Referring to FIG. 1, FIG. 1 is a schematic flowchart of a method for identifying a web page request provided by an example of the present application.

In block 101, a plurality of sample web page requests marked with tags are obtained; wherein each tag of the tags is a tag indicating that a web page request is a malicious web page request or a tag indicating that a web page request is a non-malicious web page request. For each sample web page request of the plurality of sample web page requests, the tag of this sample web page request is to indicate whether this sample web page request is a malicious web page request or non-malicious web page request.

In the technical solution provided by the example of the present disclosure, a web page request is used to access or acquire a network resource. The web page request may include a URL (Uniform Resource Locator) required for accessing or acquiring the network resource. By way of example and not by way of limitation, a web page request may be specifically a URL.

In order to improve the accuracy and reliability of the web page request identification model obtained by training, a large number of sample web page requests marked with tags may be obtained to train the web page request identification model.

In block 102, a structural feature of each sample web page request is determined.

A web page request may be composed of information such as parameters, parameter values, illegal parameters and the like. Here, an illegal parameter is a character that is not allowed to be included in the web page request, for example, a Chinese character, a space, or the like.

In the technical solution provided in the example of the present disclosure, after the sample web page requests are obtained, for each sample web page request obtained, the structural feature of this sample web page request may be determined based on information such as parameters, parameter value, illegal parameter information and the like included in this sample web page request.

In an example of the present disclosure, the structural feature of the sample web page request may include the number of parameters, the average length of parameter values, the maximum number of bytes of parameter values, the number of illegal parameters and the like. For example, if the number of parameters in a sample web page request W is 10, the average length of parameter values is 6, and the number of illegal parameters is 2, it is determined that the structural feature of the sample web page request may be {10, 6, 2}.

In block 103, the text information of each sample web page request is segmented to obtain text words of each sample web page request.

In the example of the present disclosure, the text information of the web page request may include information such as a domain name, a path, a parameter name, and a parameter value. The text information of the web page request is separated by a separator. Here, the separator includes /, ? , =, & or the like. For example, a URL is user name:password@subdomain.domain name.top level domain:port number/ directory/file name.file suffix?parameter=value#mark, wherein subdomain.domain name.top level domain:port number/directory/file name.file suffix is the path of the URL.

In an example of the present disclosure, in segmenting text information of a sample web page request after the sample web page request is obtained, a separator may be used to segment the text information of the sample web page request to obtain text words. In this way, a complete information in a sample web page request is not divided into a plurality of text words. For example, a domain name is not divided into a plurality of text words, and a path is not divided into a plurality of text words, a parameter name is not divided into a plurality of text words, and a parameter value is not divided into a plurality of text words. In this way, the extracted text words can be used to identify web page requests.

In block 104, a weight of each text word of each sample web page request is calculated.

In the example of the present disclosure, a weight of a text word may be a system default weight. For example, after a text word is obtained, the default weight of the text word is used as the weight of the text word.

A weight of a text word may also be the number of occurrences of the text word. That is, the number of occurrences of a text word is used as the weight of the text word. The number of occurrences of a text word is the number of occurrences of the text word in all the text words obtained.

A weight of a text word may also be determined based on the number of sample web page requests that include the text word.

In block 105, for each sample web page request, a feature vector of this sample web page request is determined according to the structural feature of this sample web page request and the weight of each text word of this sample web page request.

For each sample web page request, after the structural feature of this sample web page request and the weight of each text word of this sample web page request are determined, a feature vector of this sample web page request may be determined based on the structural feature of this sample web page request and the weight of each text word of this sample web page request.

For example, for one sample web page request, the structural feature of the sample web page request is determined as {10, 6, 2}. In addition, 13 text words are obtained from the sample web page request, and the weights of the text words of the sample web page request are respectively determined as 0.2, 0.3, 0.15, 0.7, 0.62, 0.42, 0.32, 0.95, 0.57, 0.88, 0.63, 0.51, 0.16. It can be determined that the feature vector of the sample web page request is {10, 6, 2, 0.2, 0.3, 0.15, 0.7, 0.62, 0.42, 0.32, 0.95, 0.57, 0.88, 0.63, 0.51, 0.16}, or it can be determined that the feature vector of the sample web page request is {0.2, 0.3, 0.15, 0.7, 0.62, 0.42, 0.32, 0.95, 0.57, 0.88, 0.63, 0.51, 0.16, 10, 6, 2}.

In block 106, a web page request identification model is trained according to the feature vector of each sample web page request and the tag of each sample web page request, based on a machine learning algorithm.

The above machine learning algorithm may be, but not limited to a support vector machine algorithm, a neural network, a logistic regression or the like.

In an example of the present disclosure, the web page request identification model may be trained according to the feature vector of each sample web page request and the tag of each sample web page request, based on the support vector machine algorithm and a stochastic gradient descent algorithm. In training the web page request identification model, parameters of the web page request identification model may be adjusted by using the stochastic gradient descent algorithm, an error backpropagation algorithm, or the like. Here, the web page request identification model is a support vector machine model. The parameters of the web page request identification model include: a penalty coefficient, a kernel function, a kernel function coefficient, a memory resource required for training, a weighting of each type of features, a maximum number of iterations, or the like.

The penalty coefficient is a tolerance for errors.

The higher the penalty coefficient is, the lower the tolerance for errors is.

The kernel function may be one of RBF (Radial Basis Function), Linear function, Poly function, and Sigmoid function.

The weighting of each type of features is divided into a weighting of the structural feature and a weighting of the weights of the text words.

The support vector machine model is a discriminant model, which can directly perform modeling on conditional probability. The much less number of sample web page requests is required when the web page request identification model is trained by taking the support vector machine model as the web page request identification model, compared with taking the hidden Markov model, which is a generative model needing to consider the joint probability distribution, as the web page request identification model. This effectively improves the training speed of the web page request identification model.

In an example of the present disclosure, in order to further improve a training speed of the web page request identification model, the parameters of the web page request identification model may be preset according to the experience value before the web page request identification model is trained.

In the example of the present disclosure, the web page request identification model is trained according to the weights of the text words and the structural feature of the web page request, so that the type of features for training the web page request identification model is increased. After the training of the web page request identification model is finished, a web page request identification model with a higher identification accuracy can be obtained.

In block 107, when a web page request to be identified is obtained, the web page request to be identified is identified by using the web page request identification model, to determine whether the web page request to be identified is a malicious web page request or not.

In the example of the present disclosure, when a web page request to be identified is obtained, the structural feature of the web page request to be identified is determined.

Text information of the web page request to be identified is segmented to obtain text words of the web page request to be identified.

A weight of each text word of the web page request to be identified is calculated.

A feature vector of the web page request to be identified is determined according to the structural feature of the web page request to be identified and the weight of each text word.

The feature vector of the web page request to be identified is input into the web page request identification model, and the web page request identification model determines a first probability and a second probability of the web page request to be identified according to the feature vector of the web page request to be identified. The first probability is a probability that the web page request to be identified is a malicious web page request, and the second probability is a probability that the web page request to be identified is a non-malicious web page request.

The web page request identification model outputs an identification result according to the first probability and the second probability. For example, if the first probability is greater than the second probability, the identification result output by the web page request identification model is that the web page request to be identified is a malicious web page request. If the first probability is smaller than or equal to the second probability, the identification result output by the web page request identification model is that the web page request to be identified is a non-malicious web page request.

In the technical solution provided by the example of the present disclosure, in training the web page request identification model according to the weights of the text words and the structural feature of the web page request, the text information of the web page request and the structural feature of the web page request are considered, so that the type of features for training the web page request identification model is increased. In identifying a web page request to be identified, the weights of the text words and the structural feature of the web page request to be identified are also extracted for determining whether the web page request to be identified is a malicious web page request or not. This effectively improves the accuracy of the identification of the web page request.

In an example, the weight of each text word may be determined in following ways.

In section 1, IDF (Inverse Document Frequency) and TF (Term Frequency) of each text word of each sample web page request are determined.

In an example, for each sample web page request, the number M of web page requests in a corpus that have the same path as the path included in this sample web page request is determined, and for each text word of this sample web page request, the number m of web page requests in the corpus that include this text word is determined. For each text word of each sample web page request, the IDF of this text term can be determined according to the following formula:

$$IDF = \log (M/m).$$

The above corpus may be preset. The corpus includes a large number of web page requests, and a large number of text words. In an example of the present disclosure, an index number may be set for each text word in the corpus. The index numbers of all of text words have the same form, and the index number of one text word is different from the index numbers of other text words.

Text words of a web page request have various forms. Thus, in order to search for a web page request including a text word from the corpus, the corpus is required to be searched in the form of the text word. For example, if a text word 1 is a word in digital form, a web page request including the text word 1 is searched for in digital form. For another example, if a text word 2 is a word in letter form, a web page request including the text word 2 is searched for in letter form. This may cause that the form for searching for a text word needs to be frequently switched, so as to search for a web page request including the text word in the corpus, in a case of obtaining a large number of text words.

In the example of the present disclosure, according to the index number of the text word, for each sample web page request, the process of searching for a web page request may include: determining an index number of each text word of the sample web page request; for each text word of the sample web page request, searching for a web page request including the index number of this text word in the corpus, and determining the number of web page requests including the index number of this text word, that is, the number m of web page requests including this text word.

It can be seen that in searching for a web page request according to the index number, that is, in searching for a web page request including the index number of the text word in the corpus, the web page request is searched for in a common form of index number, which simplifies the complexity of searching, and is convenient for determining the number of web page requests including the text word in the corpus, and determining the IDF of each text word.

The path of a web page request is the information before the last parameter of the web page request. If a plurality of parameters connected by "&" are included before the end of a web page request, the plurality of parameters connected by "&" are referred to as the last parameter of the web page request. For example, URL 1 is :

/tienda1/publico/autenticar.jsp?modo=entrar&login=quinn&pwd=incisivo&reme       mber=off&B 1=Entrar

At this time, the last parameter of URL 1 is: modo=entrar&login=quinn&pwd=incisivo&remember=off&B1=Entrar, and the path of URL 1 is /tienda1/publico/autenticar.jsp.

For web page requests, there is no relationship between parameters belonging to different paths. For example, URL 11 is path 1? parameter = value, URL 12 is path 2? parameter=value, and URL 13 is path 1? parameter=value. The path of URL 11 is path 1, and the path of URL 12 is path 2. It can be determined that the path of URL 11 is different from that of URL 12, and thus there is no relationship between parameters of URL 11 and parameters of URL 12. The path of URL 11 and the path of URL 13 are path 1, and thus there is a relationship between parameters of URL 11 and parameters of URL 13.

In determining the IDF of a text word, only a web page request with the same path is considered, which reduces the influence of a web page request with a different path on the IDF, and improves the accuracy of extracting the feature of a web page request.

In an example, for each text word of each sample web page request, the TF of this text word may be determined based on the number of occurrences of this text word in text words of this sample web page request. For example, for each text word of each sample web page request, the TF of this text word can be determined according to the following formula:

$$TF=n.$$

wherein n is the number of occurrences of this text word in the text words of this sample web page request.

In section 2, for each text word, the weight of this text word is determined based on the IDF and TF of this text word.

In an example of the present disclosure, after an IDF and a TF of a text word is calculated, a weight $\delta$ of the text word may be determined according to the following formula:

$$\delta = TF*IDF.$$

For example, the obtained sample web page request is URL 1, and URL 1 is:

/tienda1/publico/autenticar.jsp?modo=entrar&login=quinn&pwd=incisivo&reme mber=off&B1=Entrar,

wherein, the path of URL 1 is /tienda1/publico/autenticar.jsp.

The tag of URL 1 includes a tag indicating that the web page request is a non-malicious web page request.

The separators in URL 1 include /, ? , =, &. 13 text words may be obtained by segmenting URL 1 according to these separators: (tienda1, publico, autenticar.jsp, modo, entrar, login, quinn, pwd, incisivo, remember, off, B1, Entrar).

Then, each of the above text words is searched for in the corpus. If one text word is in the corpus, the index number of the text word in the corpus is recorded. If one text word is not in the corpus, the index number of this text word is not recorded.

For the index number of each text word, the number m of URLs including the index number in the corpus is determined, and the number M of URLs in the corpus with the same path as the path of URL 1 is determined, that is, the number M of URLs with the path /tienda1/publico/autenticar.jsp is determined, and thus the IDF of the text word of URL 1 is determined as log (M/m). If each of the above 13 text words occurs once, it is determined that the TF of each text word is 1. At this time, it can be determined that the weight $\delta$ of each text word of URL 1 is 1*log (M/m).

In an example, the web page request identification model is trained according to the obtained feature vector of each sample web page request and the obtained tag of each sample web page request. Taking a non-malicious sample web page request as an example, the process of training the web page request identification model may include: inputting the feature vector of the sample web page request into the web page request identification model, and determining a third probability and a fourth probability of the sample web page request, wherein the third probability is a probability that the sample web page request is a malicious web page request, and the fourth probability is a probability that the sample web page request is a non-malicious web page request. If the third probability is greater than the fourth probability, parameters of the web page request identification model are adjusted so that the third probability is less than or equal to the fourth probability, or the third probability is still greater than the fourth probability, but the difference between the third probability and the fourth probability is smaller. If the third probability is less than or equal to the fourth probability, and the difference between the third probability and the fourth probability is less than a difference threshold, the parameters of the web page request identification model are adjusted so that the difference between the third probability and the fourth probability is greater than the difference threshold.

In an example, the web page request identification model is trained according to the obtained feature vector of each sample web page request and the obtained tag of each sample web page request. For example, a plurality of sample web page requests are input into the web page request identification model, respectively; the third probability and the fourth probability of each sample web page request are obtained; and the identification result of each sample web page request is output according to the third probability and the fourth probability of each sample web page request. The identification result may be that the sample web page request is a malicious web page request, or may be that the sample web page request is a non-malicious web page request.

For example, if the third probability of a web page request is greater than the fourth probability of the sample web page request, the identification result is that the sample web page request is a malicious web page request. If the third probability of a web page request is less than or equal to the fourth probability of the sample web page request, the identification result is that the sample web page request is a non- malicious web page request.

After the identification result of each sample web page request is obtained, the loss value for identifying the web page request is determined according to the identification result of each sample web page request and the tag of each sample web page request. It is determined whether the web page request identification model converges based on the loss value. If it does not converge, the parameters of the web page request identification model are adjusted, and a plurality of sample web page requests obtained are re-input into the web page request identification model respectively, so as to train the web page request identification model. If it converges, the training of the web page request identification model is ended.

In an example, the above loss value may be calculated by using a MSE (Mean Squared Error) formula as a loss function. Specifically, see the MSE formula below:

$$L(\Theta_i) = \frac{1}{H}\sum_{h=1}^{H}\|F(I_h|\Theta_i) - X_h\|^2$$

wherein, $L(\Theta_i)$ is the loss value, H represents the number of sample web page requests in a single training, $I_h$ represents the feature vector of the h-th sample web page request, and $F(I_h|\Theta_i)$ represents the identification result obtained after inputting the feature vector of the h-th sample web page request into the web page request identification model, $X_h$ represents the tag of the h-th sample web page request, and i is the number of times of training. The tag of the sample web page request may be 1 or 0. For example, if the tag of the sample web page request is 1, it is indicated that the sample web page request is a malicious web page request; if the tag of the sample web page request is 0, it is indicated that the sample web page request is a non-malicious web page request.

Of course, the loss value may be calculated by using other formulas as a loss function, which is not limited by the example of the present disclosure.

In an example, a loss threshold may be preset, and determining whether the web page request identification model converges based on the loss value may be: determining whether the calculated loss value is less than the loss threshold. If it is less than the loss threshold, it is determined that the web page request identification model converges. If it is not less than the loss threshold, it is determined that the web page request identification model does not converge.

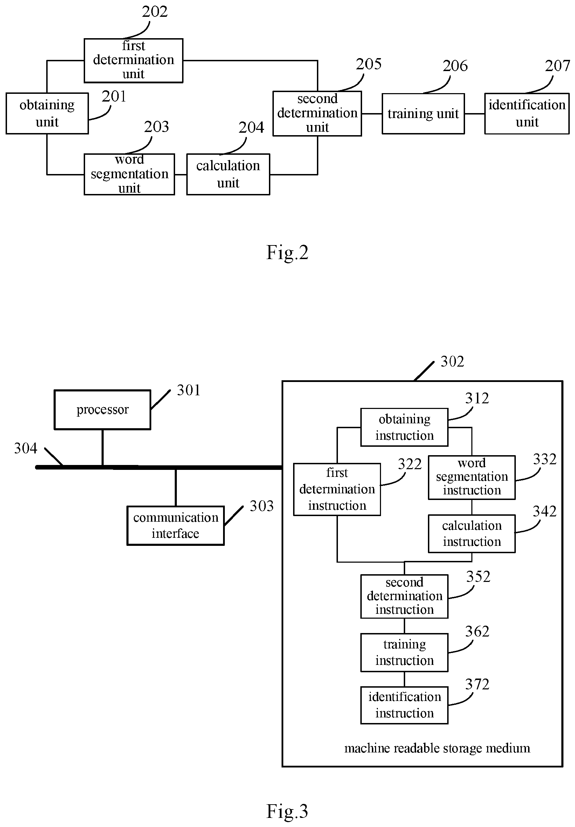

Corresponding to the above example of the method for identifying a web page request, an example of the present application further provides an apparatus for identifying a web page request. Referring to FIG. 2, FIG. 2 is a schematic structural diagram of an apparatus for identifying a web page request provided by an example of the present application. The apparatus includes an obtaining unit 201, a first determination unit 202, a word segmentation unit 203, a calculation unit 204, a second determination unit 205, a training unit 206 and an identification unit 207.

The obtaining unit 201 is to obtain a plurality of sample web page requests marked with tags, wherein each of the tags is a tag indicating that a web page request is a malicious web page request or a tag indicating that a web page request is a non-malicious web page request. For each sample web page request of the plurality of sample web page requests, the tag of this sample web page request is to indicate whether this sample web page request is a malicious web page request or non-malicious web page request.

The first determination unit 202 is to determine a structural feature of each sample web page request.

The word segmentation unit 203 is to segment text information of each sample web page request to obtain text words of each sample web page request.

The calculation unit 204 is to calculate a weight of each text word of each sample web page request.

The second determination unit 205 is to, for each sample web page request, determine a feature vector of this sample web page request according to the structural feature of this sample web page request and the weight of each text word of this sample web page request.

The training unit 206 is to train a web page request identification model according to the feature vector of each sample web page request and the tag of each sample web page request, based on a machine learning algorithm.

The identification unit 207 is to, when a web page request to be identified is obtained, identify the web page request to be identified by using the web page request identification model, to determine whether the web page request to be identified is a malicious web page request or not.

In an example of the present disclosure, the first determination unit 202 may be to
determine the structural feature of each sample web page request according to the number of parameters, the average length of parameter values, and the number of illegal parameters in this sample web page request.

In an example of the present disclosure, the word segmentation unit 203 may be to
segment the text information of each sample web page request by using separators of a web page request, to obtain the text words of each sample web page request.

In an example of the present disclosure, the calculation unit 204 may be to
for each text word of each sample web page request, determine an IDF of this text word according to the following formula:

$$IDF = \log(M/m);$$

wherein M is the number of web page requests with the same path as a path of this sample web page request in a corpus, and m is the number of web page requests including this text word in the corpus;

and

determine a weight δ of this text word according to the following formula:

$$\delta = TF * IDF;$$

wherein TF is the number of occurrences of this text word in text words of this sample web page request.

In an example of the present disclosure, the calculation unit 206 may be to

based on a support vector machine algorithm and a stochastic gradient descent algorithm, train the web page request identification model according to the feature vector of each sample web page request and the tag of each sample web page request.

In the example of the present disclosure, in training the web page request identification model according to the weights of the text words and the structural feature of the web page request, the text information of the web page request and the structural feature of the web page request are considered, so that the type of features for training the web page request identification model is increased. This can effectively improve the accuracy of the identification of the web page request.

Corresponding to the examples of the method for identifying a web page request and the apparatus for identifying a web page request, an example of the present application further provides an electronic device, including a processor and a machine readable storage medium. The machine readable storage medium stores machine executable instructions that can be executed by the processor. The processor is caused by the machine executable instructions to implement any portion of the method for identifying a web page request.

FIG. 3 is a schematic structural diagram of an electronic device provided by an example of the present application, including a processor 301 and a machine readable storage medium 302. The machine readable storage medium 302 stores machine executable instructions that can be executed by the processor 301.

In the example of the present disclosure, the machine executable instructions include an obtaining instruction 312, a first determination instruction 322, a word segmentation instruction 332, a calculation instruction 342, a second determination instruction 352, a training instruction 362, and an identification instruction 372.

The processor 301 is caused by the obtaining instruction 312 to obtain a plurality of sample web page requests marked with tags, wherein each of the tags is a tag indicating that a web page request is a malicious web page request or a tag indicating that a web page request is a non-malicious web page request. For each sample web page request of the plurality of sample web page requests, the tag of this sample web page request is to indicate whether this sample web page request is a malicious web page request or non-malicious web page request.

The processor 301 is caused by the first determination instruction 322 to determine a structural feature of each sample web page request.

The processor 301 is caused by the word segmentation instruction 332 to segment text information of each sample web page request to obtain text words of each sample web page request.

The processor 301 is caused by the calculation instruction 342 to calculate a weight of each text word of each sample web page request.

The processor 301 is caused by the second determination instruction 352 to, for each sample web page request, determine a feature vector of this sample web page request according to the structural feature of this sample web page request and the weight of each text word of this sample web page request.

The processor 301 is caused by the training instruction 362 to train a web page request identification model according to the feature vector of each sample web page request and the tag of each sample web page request, based on a machine learning algorithm.

The processor 301 is caused by the identification instruction 372 to, when a web page request to be identified is obtained, identify the web page request to be identified by using the web page request identification model, to determine whether the web page request to be identified is a malicious web page request or not.

In an example of the present disclosure, the processor 301 may be caused by the first determination unit 322 to

determine the structural feature of each sample web page request according to the number of parameters, the average length of parameter values, and the number of illegal parameters in this sample web page request.

In an example of the present disclosure, the processor 301 may be caused by the word segmentation instruction 332 to

segment the text information of each sample web page request by using separators of a web page request, to obtain the text words of each sample web page request.

In an example of the present disclosure, the processor 301 may be caused by the calculation instruction 342 to

for each text word of each sample web page request, determine an IDF of this text word according to the following formula:

$$IDF = \log (M/m);$$

wherein M is the number of web page requests with the same path as a path of this sample web page request in a corpus, and m is the number of web page requests including this text word in the corpus; and

determine a weight δ of this text word according to

the following formula:

$$\delta = TF*IDF;$$

wherein TF is the number of occurrences of this text word in text words of this sample web page request.

In an example of the present disclosure, the processor 301 may be caused by the training instruction 362 to

based on a support vector machine algorithm and a stochastic gradient descent algorithm, train the web page request identification model according to the feature vector of each sample web page request and the tag of each sample web page request.

In the example of the present disclosure, in training the web page request identification model according to the weights of the text words and the structural feature of the web page request, the text information of the web page request and the structural feature of the web page request are considered, so that the type of features for training the web page request identification model is increased. This can effectively improve the accuracy of the identification of the web page request.

In addition, as shown in FIG. 3, the electronic device may further include a communication interface 303 and a communication bus 304; wherein the processor 301, the machine readable storage medium 302, and the communication interface 303 communicate with each other through the communication bus 304, and the communication interface 303 is to communicate between the above electronic device and other devices.

The communication bus 304 may be a PCI (Peripheral Component Interconnect) bus or an EISA (Extended Industry Standard Architecture) bus, or the like. The communication bus 304 may be divided into an address bus, a data bus, a control bus, or the like. For ease of representation, only one thick line is shown in FIG. 3, but it does not mean that there is only one bus or one type of bus.

The machine readable storage medium 302 may include a RAM (Random Access Memory), and may also include a NVM (Non-Volatile Memory), such as at least one disk storage. In addition, the machine readable storage medium 302 may also be at least one storage device located remotely from the above processor.

The processor 301 may be a general processor, including a CPU (Central Processing Unit), an NP (Network Processor), or the like. It may also be a DSP (Digital Signal Processing), an ASIC (Application Specific Integrated Circuit), an FPGA (Field-Programmable Gate Array) or other programmable logic devices, discrete gates or transistor logic devices, discrete hardware components.

Corresponding to the examples of the method for identifying a web page request and the apparatus for identifying a web page request, an example of the present application further provides a machine readable storage medium storing machine executable instructions that cause the processor to implement any portion of the method for identifying a web page request.

The machine executable instructions include an obtaining instruction, a first determination instruction, a word segmentation instruction, a calculation instruction, a second determination instruction, a training instruction, and an identification instruction.

When being called and executed by the processor, the obtaining instruction causes the processor to obtain a plurality of sample web page requests marked with tags, wherein each of the tags is a tag indicating that a web page request is a malicious web page request or a tag indicating that a web page request is a non-malicious web page request. For each sample web page request of the plurality of sample web page requests, the tag of this sample web page request is to indicate whether this sample web page request is a malicious web page request or non-malicious web page request.

When being called and executed by the processor, the first determination instruction causes the processor to determine a structural feature of each sample web page request.

When being called and executed by the processor, the word segmentation instruction causes the processor to segment text information of each sample web page request to obtain text words of each sample web page request.

When being called and executed by the processor, the calculation instruction causes the processor to calculate a weight of each text word of each sample web page request.

When being called and executed by the processor, the second determination instruction causes the processor to, for each sample web page request, determine a feature vector of this sample web page request according to the structural feature of this sample web page request and the weight of each text word of this sample web page request.

When being called and executed by the processor, the training instruction causes the processor to train a web page request identification model according to the feature vector of each sample web page request and the tag of each sample web page request, based on a machine learning algorithm.

When being called and executed by the processor, the identification instruction causes the processor to, when a web page request to be identified is obtained, identify the web page request to be identified by using the web page request identification model, to determine whether the web page request to be identified is a malicious web page request or not.

In an example of the present disclosure, when being called and executed by the processor, the first determination instruction may cause the processor to determine the structural feature of each sample web page request according to the number of parameters, the average length of parameter values, and the number of illegal parameters in this sample web page request.

In an example of the present disclosure, when being called and executed by the processor, the word segmentation instruction may cause the processor to segment the text information of each sample web page request by using separators of a web page request, to obtain the text words of each sample web page request.

In an example of the present disclosure, when being called and executed by the processor, the calculation instruction may cause the processor to

for each text word of each sample web page request, determine an IDF of this text word according to the following formula:

$$IDF = \log (M/m);$$

wherein M is the number of web page requests with the same path as a path of this sample web page request in a corpus, and m is the number of web page requests including this text word in the corpus; and

determine a weight δ of this text word according to the following formula:

$$\delta = TF * IDF;$$

wherein TF is the number of occurrences of this text word in text words of this sample web page request.

In an example of the present disclosure, when being called and executed by the processor, the training instruction may cause the processor to

based on a support vector machine algorithm and a stochastic gradient descent algorithm, train the web page request identification model according to the feature vector of each sample web page request and the tag of each sample web page request.

In the example of the present disclosure, in training the web page request identification model according to the weights of the text words and the structural feature of the web page request, the text information of the web page request and the structural feature of the web page request are considered, so that the type of features for training the web page request identification model is increased. This can effectively improve the accuracy of the identification of the web page request.

Corresponding to the examples of the method for identifying a web page request and the apparatus for identifying a web page request, an example of the present disclosure further provides machine executable instructions, wherein the processor is caused by the machine executable instructions to implement any portion of the method for identifying a web page request.

In the example of the present disclosure, the machine executable instructions include an obtaining instruction, a first determination instruction, a word segmentation instruction, a calculation instruction, a second determination instruction, a training instruction, and an identification instruction.

The processor is caused by the obtaining instruction to obtain a plurality of sample web page requests marked with tags, wherein each of the tags is a tag indicating that a web page request is a malicious web page request or a tag indicating that a web page request is a non-malicious web page request. For each sample web page request of the plurality of sample web page requests, the tag of this sample web page request is to indicate whether this sample web page request is a malicious web page request or non-malicious web page request.

The processor is caused by the first determination instruction to determine a structural feature of each sample web page request.

The processor is caused by the word segmentation instruction to segment text information of each sample web page request to obtain text words of each sample web page request.

The processor is caused by the calculation instruction to calculate a weight of each text word of each sample web page request.

The processor is caused by the second determination instruction to, for each sample web page request, determine a feature vector of this sample web page request according to the structural feature of this sample web page request and the weight of each text word of this sample web page request.

The processor is caused by the training instruction to train a web page request identification model according to the feature vector of each sample web page request and the tag of each sample web page request, based on a machine learning algorithm.

The processor is caused by the identification instruction to, when a web page request to be identified is obtained, identify the web page request to be identified by using the web page request identification model, to determine whether the web page request to be identified is a malicious web page request or not.

In an example of the present disclosure, the processor may be caused by the first determination instruction to

determine the structural feature of each sample web page request according to the number of parameters, the average length of parameter values, and the number of illegal parameters in this sample web page request.

In an example of the present disclosure, the processor may be caused by the word segmentation instruction to

segment the text information of each sample web page request by using separators of a web page request, to obtain the text words of each sample web page request.

In an example of the present disclosure, the processor may be caused by the calculation instruction to

for each text word of each sample web page request, determine an IDF of this text word according to the following formula:

$$IDF = \log(M/m);$$

wherein M is the number of web page requests with the same path as a path of this sample web page request in a corpus, and m is the number of web page requests including this text word in the corpus; and

determine a weight δ of this text word according to the following formula:

$$\delta = TF * IDF;$$

wherein TF is the number of occurrences of this text word in text words of this sample web page request.

In an example of the present disclosure, the processor may be caused by the training instruction to based on a support vector machine algorithm and a stochastic gradient descent algorithm, train the web page request identification model according to the feature vector of each sample web page request and the tag of each sample web page request.

In the example of the present disclosure, in training the web page request identification model according to the weights of the text words and the structural feature of the web page request, the text information of the web page request and the structural feature of the web page request are considered, so that the type of features for training the web page request identification model is increased. This can effectively improve the accuracy of the identification of the web page request.

It should be noted that the relationship terms use here, such as "first," "second," and the like are only used to distinguish one entity or operation from another entity or operation, but do not necessarily require or imply that there is actual relationship or order between these entities or operations. Moreover, the terms "include," "comprise" or any variants thereof are intended to cover a non-exclusive inclusion, such that processes, methods, articles, or devices, including a series of elements, include not only those elements that have been listed, but also other elements that have not specifically been listed or the elements intrinsic to these processes, methods, articles, or devices. Without further limitations, elements limited by the wording "comprise(s) a/an..." and "include(s) a/an..." do not exclude additional identical elements in the processes, methods, articles, or devices, including the listed elements.

All of the examples in the description are described in a correlated manner, and identical or similar parts in various examples can refer to one another. The description for each example focuses on the differences from other examples. In particular, the examples of the apparatus for identifying a web page request, the electronic device, the machine readable storage medium and the machine executable instructions are described briefly, since they are substantially similar to the example of the method for identifying a web page request. The related contents can refer to the description of the example of the method for identifying a web page request.

The examples described above are simply preferable examples of the present disclosure, and are not intended to limit the scope of protection of the present disclosure. Any modifications, alternatives, improvements, or the like within the present disclosure shall be included within the scope of protection of the present disclosure.

**Claims**

1. A method for identifying a web page request, the method comprising:

obtaining a plurality of sample web page requests marked with tags (101), wherein each tag indicates whether a web page request is a malicious web page request or a non-malicious web page request;
determining a structural feature of each sample web page request (102);
segmenting text information of each sample web page request to obtain text words (103);
calculating a weight of each text word of each sample web page request (104);
for each sample web page request, determining a feature vector of this sample web page request according to the structural feature of this sample web page request and the weight of each text word of this sample web page request (105);
training a web page request identification model according to the feature vector of each sample web page request and the tag of each sample web page request, based on a machine learning algorithm (106); and
when a web page request to be identified is obtained, identifying the web page request to be identified by using the web page request identification model, to determine whether the web page request to be identified is a malicious web page request or not (107),
**characterized in that** calculating a weight of each text word of each sample web page request (104) comprises:

for each text word of each sample web page request, determining an Inverse Document Frequency, IDF, of this text word according to the following formula:

$$IDF=\log (M/m);$$

wherein M is the number of web page requests with the same path as a path of this sample web page request in a corpus, and m is the number of web page requests including this text word in the corpus; and determining a weight $\delta$ of this text word according to the following formula:

$$\delta=TF*IDF;$$

wherein TF is the number of occurrences of this text word in text words of this sample web page request,

wherein an index number is set for each text word in the corpus, index numbers of all of text words have same form, and the index number of one text word is different from the index numbers of other text words,

wherein the number m of web page requests including the text word in the corpus is determined in the following manner: determining an index number of each text word of the sample web page request; for each text word of the sample web page request, searching for a web page request including the index number of this text word in the corpus, and determining the number of web page requests including the index number of this text word, that is, the number m of web page requests including this text word.

2. The method of claim 1, wherein determining a structural feature of each sample web page request (102) comprises:
determining the structural feature of each sample web page request according to the number of parameters, an average length of parameter values, and the number of illegal parameters in this sample web page request.

3. The method of claim 1, wherein segmenting text information of each sample web page request to obtain text words (103) comprises:
segmenting the text information of each sample web page request by using separators of a web page request, to obtain the text words.

4. The method of claim 1, wherein training a web page request identification model according to the feature vector of each sample web page request and the tag of each sample web page request, based on a machine learning algorithm (106) comprises:
based on a support vector machine algorithm and a stochastic gradient descent algorithm, training the web page request identification model according to the feature vector of each sample web page request and the tag of each sample web page request.

5. An apparatus for identifying a web page request, the apparatus comprising:

an obtaining unit (201) to obtain a plurality of sample web page requests marked with tags, wherein each tag indicates whether a web page request is a malicious web page request or a non-malicious web page request;
a first determination unit (202) to determine a structural feature of each sample web page request;
a word segmentation unit (203) to segment text information of each sample web page request to obtain text words;
a calculation unit (204) to calculate a weight of each text word of each sample web page request;
a second determination unit (205) to, for each sample web page request, determine a feature vector of this sample web page request according to the structural feature of this sample web page request and the weight of each text word of this sample web page request;
a training unit (206) to train a web page request identification model according to the feature vector of each sample web page request and the tag of each sample web page request, based on a machine learning algorithm; and
an identification unit (207) to, when a web page request to be identified is obtained, identify the web page request to be identified by using the web page request identification model, to determine whether the web page request to be identified is a malicious web page request or not, **characterized in that** the calculation unit (204) is to
for each text word of each sample web page request, determine an Inverse Document Frequency, IDF, of this text word according to the following formula:

$$IDF=\log (M/m);$$

wherein M is the number of web page requests with the same path as a path of this sample web page request in a corpus, and m is the number of web page requests including this text word in the corpus; and
determine a weight $\delta$ of this text word according to the following formula:

$$\delta=TF*IDF;$$

wherein TF is the number of occurrences of this text word in text words of this sample web page request.

wherein an index number is set for each text word in the corpus, index numbers of all of text words have same form, and the index number of one text word is different from the index numbers of other text words,

wherein the number m of web page requests including the text word in the corpus is determined in the following manner: determining an index number of each text word of the sample web page request; for each text word of the sample web page request, searching for a web page request including the index number of this text word in the corpus, and determining the number of web page requests including the index number of this text word, that is, the number m of web page requests including this text word.

6. The apparatus of claim 5, wherein the first determination unit (202) is to
determine the structural feature of each sample web page request according to the number of parameters, an average length of parameter values, and the number of illegal parameters in this sample web page request.

7. The apparatus of claim 5, wherein the word segmentation unit (203) is to
segment the text information of each sample web page request by using separators of a web page request, to obtain the text words.

8. A machine readable storage medium (302) storing machine executable instructions, the machine executable instructions comprising a obtaining instruction (312), a first determining instruction (322), a sending instruction, a word segmentation instruction (332), a calculation instruction (342), a second determination instruction (352), a training instruction (362), and an identification instruction (372), wherein

when being called and executed by a processor (301), the obtaining instruction (312) causes the processor (301) to obtain a plurality of sample web page requests marked with tags, wherein each tag indicates whether a web page request is a malicious web page request or a non-malicious web page request;
when being called and executed by the processor (301), the first determination instruction (322) causes the processor (301) to determine a structural feature of each sample web page request;
when being called and executed by the processor (301), the word segmentation instruction (332) causes the processor (301) to segment text information of each sample web page request to obtain text words;
when being called and executed by the processor (301), the calculation instruction (342) causes the processor (301) to calculate a weight of each text word of each sample web page request;
when being called and executed by the processor (301), the second determination instruction (352) causes the processor (301) to, for each sample web page request, determine a feature vector of this sample web page request according to the structural feature of this sample web page request and the weight of each text word of this sample web page request;
when being called and executed by the processor (301), the training instruction causes (362) the processor (301) to train a web page request identification model according to the feature vector of each sample web page request and the tag of each sample web page request, based on a machine learning algorithm;
when being called and executed by the processor (301), the identification instruction (372) causes the processor (301) to, when a web page request to be identified is obtained, identify the web page request to be identified by using the web page request identification model, to determine whether the web page request to be identified is a malicious web page request or not, **characterized in that** when being called and executed by the processor (301), the calculation instruction (342) causes the processor (301) to for each text word of each sample web page request, determine an Inverse Document Frequency, IDF, of this text word according to the following formula:

$$IDF = \log (M/m);$$

wherein M is the number of web page requests with the same path as a path of this sample web page request in a corpus, and m is the number of web page requests including this text word in the corpus; and
determine a weight δ of this text word according to the following formula:

$$\delta = TF * IDF;$$

wherein TF is the number of occurrences of this text word in text words of this sample web page request.

wherein an index number is set for each text word in the corpus, index numbers of all of text words have same form, and the index number of one text word is different from the index numbers of other text words,

wherein the number m of web page requests including the text word in the corpus is determined in the following manner: determining an index number of each text word of the sample web page request; for each text word of the sample web page request, searching for a web page request including the index number of this text word in the corpus, and determining the number of web page requests including the index number of this text word, that is, the number m of web page requests including this text word.

9. Machine executable instructions, the machine executable instructions comprises a obtaining instruction (312), a first determining instruction (322), a sending instruction, a word segmentation instruction (332), a calculation instruction (342), a second determination instruction (352), a training instruction (362), and an identification instruction (372); wherein

a processor (301) is caused by the obtaining instruction (312) to obtain a plurality of sample web page requests marked with tags, wherein each tag indicates whether a web page request is a malicious web page request or a non-malicious web page request;
the processor (301) is caused by the first determination instruction (322) to determine a structural feature of each sample web page request;
the processor (301) is caused by the word segmentation instruction (332) to segment text information of each sample web page request to obtain text words;
the processor (301) is caused by the calculation instruction (342) to calculate a weight of each text word of each sample web page request;
the processor (301) is caused by the second determination instruction (352) to, for each sample web page request, determine a feature vector of this sample web page request according to the structural feature of this sample web page request and the weight of each text word of this sample web page request;
the processor (301) is caused by the training instruction (362) to train a web page request identification model according to the feature vector of each sample web page request and the tag of each sample web page request, based on a machine learning algorithm;
the processor (301) is caused by the identification instruction (372) to, when a web page request to be identified is obtained, identify the web page request to be identified by using the web page request identification model, to determine whether the web page request to be identified is a malicious web page request or not,

**characterized in that** the processor (301) is caused by the calculation instruction (342) to:

for each text word of each sample web page request, determine an Inverse Document Frequency, IDF, of this text word according to the following formula:

$$IDF = \log(M/m);$$

wherein M is the number of web page requests with the same path as a path of this sample web page request in a corpus, and m is the number of web page requests including this text word in the corpus; and determine a weight $\delta$ of this text word according to the following formula:

$$\delta = TF * IDF;$$

wherein TF is the number of occurrences of this text word in text words of this sample web page request.
wherein an index number is set for each text word in the corpus, index numbers of all of text words have same form, and the index number of one text word is different from the index numbers of other text words,
wherein the number m of web page requests including the text word in the corpus is determined in the following manner: determining an index number of each text word of the sample web page request; for each text word of the sample web page request, searching for a web page request including the index number of this text word in the corpus, and determining the number of web page requests including the index number of this text word, that is, the number m of web page requests including this text word.

**Patentansprüche**

1. Verfahren zur Identifizierung einer Webseitenanfrage, wobei das Verfahren umfasst:

Erhalten einer Vielzahl von Beispiel-Webseitenanfragen, die mit Tags (101) markiert sind, wobei jedes Tag anzeigt, ob eine Webseitenanfrage eine bösartige oder eine nicht-bösartige Webseitenanfrage ist;
Bestimmen eines Strukturmerkmals jeder Beispiel-Webseitenanfrage (102);
Segmentieren der Textinformationen jeder Beispiel-Webseitenanfrage, um Textwörter zu erhalten (103);

Berechnen einer Gewichtung jedes Textworts jeder Beispiel-Webseitenanfrage (104);

Bestimmen eines Merkmalsvektors für jede Beispiel-Webseitenanfrage gemäß dem Strukturmerkmal dieser Beispiel-Webseitenanfrage und der Gewichtung jedes Textworts dieser Beispiel-Webseitenanfrage (105);

Trainieren eines Webseitenanfrage-Identifizierungsmodells gemäß dem Merkmalsvektor jeder Beispiel-Webseitenanfrage und dem Tag jeder Beispiel-Webseitenanfrage, basierend auf einem Algorithmus für maschinelles Lernen (106); und

wenn eine zu identifizierende Webseitenanfrage erhalten wird, Identifizieren der zu identifizierenden Webseitenanfrage unter Verwendung des Webseitenanfrage-Identifizierungsmodells, um zu bestimmen, ob die zu identifizierende Webseitenanfrage eine bösartige Webseitenanfrage ist oder nicht (107), **dadurch gekennzeichnet, dass** das Berechnen einer Gewichtung jedes Textworts jede Beispiel-Webseitenanfrage (104) umfasst:

Bestimmen der inversen Dokumentenhäufigkeit (Inverse Document Frequency), IDF, für jedes Textwort jeder Beispiel-Webseitenanfrage nach der folgenden Formel:

$$IDF = \log(M/m);$$

wobei M die Anzahl der Webseitenanfragen mit demselben Pfad wie ein Pfad dieser Beispiel-Webseitenanfrage in einem Korpus und m die Anzahl der Webseitenanfragen, die dieses Textwort im Korpus aufweisen; und

Bestimmen eines Gewichts δ dieses Textworts gemäß der folgenden Formel:

$$\delta = TF * IDF;$$

wobei TF die Anzahl der Vorkommen dieses Textworts in den Textwörtern dieser Beispiel-Webseitenanfrage ist, wobei für jedes Textwort im Korpus eine Indexnummer festgelegt wird, die Indexnummern aller Textwörter die gleiche Form haben, und die Indexnummer eines Textworts sich von den Indexnummern der anderen Textwörter unterscheidet, wobei die Anzahl m der Webseitenanfragen, die das Textwort im Korpus aufweisen, auf folgende Weise bestimmt wird: Bestimmen einer Indexnummer für jedes Textwort der Beispiel-Webseitenanfrage; für jedes Textwort der Beispiel-Webseitenanfrage, Suchen nach einer Webseitenanfrage, die die Indexnummer dieses Textworts im Korpus aufweist, und Bestimmen der Anzahl der Webseitenanfragen, die die Indexnummer dieses Textworts aufweisen, d.h. die Anzahl m der Webseitenanfragen, die dieses Textwort aufweisen.

2. Verfahren nach Anspruch 1, wobei das Bestimmen eines Strukturmerkmals jeder Beispiel-Webseitenanfrage (102) umfasst:
Bestimmen des Strukturmerkmals jeder Beispiel-Webseitenanfrage gemäß der Anzahl der Parameter, einer durchschnittlichen Länge der Parameterwerte und der Anzahl der illegalen Parameter in dieser Beispiel-Webseitenanfrage.

3. Verfahren nach Anspruch 1, wobei das Segmentieren der Textinformationen jeder Beispiel- Webseitenanfrage zum Erhalten von Textwörtern (103) umfasst:
Segmentieren der Textinformationen jeder Beispiel-Webseitenanfrage durch Verwendung von Trennzeichen einer Webseitenanfrage, um die Textwörter zu erhalten.

4. Verfahren nach Anspruch 1, wobei das Trainieren des Webseitenanfrage-Identifizierungsmodells gemäß dem Merkmalsvektor jeder Beispiel-Webseitenanfrage und dem Tag jeder Beispiel-Webseitenanfrage auf der Grundlage eines Algorithmus für maschinelles Lernen (106) umfasst:
basierend auf einem Support-Vektor-Maschinen-Algorithmus und einem stochastischen Gradienten-Abstieg-Algorithmus, Trainieren des Webseitenanfrage-Identifizierungsmodells gemäß dem Merkmalsvektor jeder Beispiel-Webseitenanfrage und dem Tag jeder Beispiel-Webseitenanfrage.

5. Vorrichtung zur Identifizierung einer Webseitenanfrage, wobei die Vorrichtung umfasst:

eine Erhaltungseinheit (201), um eine Vielzahl von Beispiel-Webseitenanfrage zu erhalten, die mit Tags markiert sind, wobei jedes Tag anzeigt, ob eine Webseitenanfrage eine bösartige Webseitenanfrage oder eine nicht-bösartige Webseitenanfrage ist;

eine erste Bestimmungseinheit (202), um ein Strukturmerkmal jeder Beispiel-Webseitenanfrage zu bestimmen;

eine Wortsegmentierungseinheit (203) zum Segmentieren von Textinformationen jeder Beispiel-Webseitenanfrage, um Textwörter zu erhalten;

eine Berechnungseinheit (204) zur Berechnung der Gewichtung jedes Textwortes jeder Beispiel-Webseitenanfrage;
eine zweite Bestimmungseinheit (205), um für jede Beispiel-Webseitenanfrage einen Merkmalsvektor dieser Beispiel-Webseitenanfrage gemäß dem Strukturmerkmal dieser Beispiel-Webseitenanfrage und der Gewichtung jedes Textworts dieser Beispiel-Webseitenanfrage zu bestimmen;
eine Trainingseinheit (206) zum Trainieren eines Webseitenanfrage-Identifizierungsmodells gemäß dem Merkmalsvektor jeder Beispiel-Webseitenanfrage und des Tags jeder Beispiel-Webseitenanfrage auf der Grundlage eines maschinellen Lernalgorithmus; und
eine Identifizierungseinheit (207), um, wenn eine zu identifizierende Webseitenanfrage erhalten wird, die zu identifizierende Webseitenanfrage unter Verwendung des Webseitenanfrage-Identifizierungsmodells zu identifizieren, um zu bestimmen, ob die zu identifizierende Webseitenanfrage eine bösartige Webseitenanfrage ist oder nicht,
**dadurch gekennzeichnet, dass** die Berechnungseinheit (204) dazu dient
für jedes Textwort jeder Beispiel-Webseitenanfrage eine inverse Dokumentenhäufigkeit, IDF, dieses Textworts gemäß der folgenden Formel zu bestimmen:

$$IDF = \log (M/m);$$

wobei M die Anzahl der Webseitenanfragen mit demselben Pfad wie ein Pfad dieser Beispiel-Webseitenanfrage in einem Korpus und m die Anzahl der Webseitenanfragen ist, die dieses Textwort in dem Korpus aufweisen; und
Bestimmen einer Gewichtung δ dieses Textworts gemäß der folgenden Formel:

$$\delta = TF * IDF;$$

wobei TF die Anzahl der Vorkommen dieses Textworts in den Textwörtern dieser Beispiel-Webseitenanfrage ist.
wobei für jedes Textwort im Korpus eine Indexnummer festgelegt wird, die Indexnummern aller Textwörter die gleiche Form haben und die Indexnummer eines Textworts sich von den Indexnummern der anderen Textwörter unterscheidet,
wobei die Anzahl m der Webseitenanfragen, die das Textwort im Korpus aufweisen, auf folgende Weise bestimmt wird: Bestimmen einer Indexnummer für jedes Textwort der Beispiel-Webseitenanfrage; für jedes Textwort der Beispiel-Webseitenanfrage, Suchen nach einer Webseitenanfrage, die die Indexnummer dieses Textworts im Korpus aufweist, und Bestimmen der Anzahl der Webseitenanfragen, die die Indexnummer dieses Textworts aufweisen, d.h. die Anzahl m der Webseitenanfragen, die dieses Textwort aufweisen.

6. Vorrichtung nach Anspruch 5, wobei die erste Bestimmungseinheit (202) dazu dient das Strukturmerkmal jeder Beispiel-Webseitenanfrage anhand der Anzahl der Parameter, einer durchschnittlichen Länge der Parameterwerte und der Anzahl der unzulässigen Parameter in dieser Beispiel-Webseitenanfrage zu bestimmen.

7. Vorrichtung nach Anspruch 5, wobei die Wortsegmentierungseinheit (203) dazu dient die Textinformationen jeder Beispiel-Webseitenanfrage unter Verwendung von Trennzeichen einer Webseitenanfrage zu segmentieren, um die Textwörter zu erhalten.

8. Maschinenlesbares Speichermedium (302), das maschinenausführbare Befehle speichert, wobei die maschinenausführbaren Befehle einen Erhaltungsbefehl (312), einen ersten Bestimmungsbefehl (322), einen Sendebefehl, einen Wortsegmentierungsbefehl (332), einen Berechnungsbefehl (342), einen zweiten Bestimmungsbefehl (352), einen Trainingsbefehl (362) und einen Identifizierungsbefehl (372) umfassen, wobei

wenn es von einem Prozessor (301) aufgerufen und ausgeführt wird, der Erhaltungsbefehl (312) den Prozessor (301) veranlasst, eine Vielzahl von Beispiel-Webseitenanfragen zu erhalten, die mit Tags markiert sind, wobei jedes Tag anzeigt, ob eine Webseitenanfrage eine bösartige Webseitenanfrage oder eine nicht-bösartige Webseitenanfrage ist;
wenn es vom Prozessor (301) aufgerufen und ausgeführt wird, veranlasst der erste Bestimmungsbefehl (322) den Prozessor (301), ein Strukturmerkmal jeder Beispiel-Webseitenanfrage zu bestimmen;
wenn es vom Prozessor (301) aufgerufen und ausgeführt wird, veranlasst der Wortsegmentierungsbefehl (332) den Prozessor (301), Textinformationen jeder Beispiel-Webseitenanfrage zu segmentieren, um Textwörter zu erhalten;
wenn es vom Prozessor (301) aufgerufen und ausgeführt wird, veranlasst der Berechnungsbefehl (342) den Prozessor (301), eine Gewichtung jedes Textworts jeder Beispiel-Webseitenanfrage zu berechnen;
wenn es vom Prozessor (301) aufgerufen und ausgeführt wird, veranlasst der zweite Bestimmungsbefehl (352) den Prozessor (301), für jede Beispiel-Webseitenanfrage einen Merkmalsvektor dieser Beispiel-Webseitenanfrage gemäß dem Strukturmerkmal dieser Beispiel-Webseitenanfrage und der Gewichtung jedes Textworts dieser Beispiel-Webseitenanfrage zu bestimmen;

wenn es von dem Prozessor (301) aufgerufen und ausgeführt wird, veranlasst der Trainingsbefehl (362) den Prozessor (301), ein Webseitenanfrage-Identifizierungsmodell gemäß dem Merkmalsvektor jeder Beispiel-Webseitenanfrage und dem Tag jeder Beispiel-Webseitenanfrage auf der Grundlage eines maschinellen Lernalgorithmus zu trainieren;

wenn es vom Prozessor (301) aufgerufen und ausgeführt wird, veranlasst der Identifizierungsbefehl (372) den Prozessor (301), wenn eine zu identifizierende Webseitenanfrage erhalten wird, die zu identifizierende Webseitenanfrage unter Verwendung des Webseitenanfrage-Identifizierungsmodells zu identifizieren, um zu bestimmen, ob die zu identifizierende Webseitenanfrage eine bösartige Webseitenanfrage ist oder nicht,

**dadurch gekennzeichnet, dass** der Berechnungsbefehl (342), wenn er von dem Prozessor (301) aufgerufen und ausgeführt wird, den Prozessor (301) veranlasst

für jedes Textwort jeder Beispiel-Webseitenanfrage eine inverse Dokumentenhäufigkeit, IDF, dieses Textworts gemäß der folgenden Formel zu bestimmen:

$$IDF = \log(M/m);$$

wobei M die Anzahl der Webseitenanfragen mit demselben Pfad wie ein Pfad dieser Beispiel-Webseitenanfrage in einem Korpus ist und m die Anzahl der Webseitenanfragen ist, die dieses Textwort im Korpus aufweisen; und Bestimmen einer Gewichtung $\delta$ dieses Textworts gemäß der folgenden Formel:

$$\delta = TF * IDF;$$

wobei TF die Anzahl der Vorkommen dieses Textworts in den Textwörtern dieser Beispiel-Webseitenanfrage ist.

wobei für jedes Textwort im Korpus eine Indexnummer festgelegt wird, die Indexnummern aller Textwörter die gleiche Form haben, und die Indexnummer eines Textworts sich von den Indexnummern der anderen Textwörter unterscheidet,

wobei die Anzahl m der Webseitenanfragen, die das Textwort im Korpus enthalten, auf folgende Weise bestimmt wird: Bestimmen einer Indexnummer für jedes Textwort der Beispiel-Webseitenanfrage; für jedes Textwort der Beispiel-Webseitenanfrage, Suchen nach einer Webseitenanfrage, die die Indexnummer dieses Textworts im Korpus aufweist, und Bestimmen der Anzahl der Webseitenanfragen, die die Indexnummer dieses Textworts aufweisen, d.h. die Anzahl m der Webseitenanfragen, die dieses Textwort aufweisen.

9.  Maschinell ausführbare Befehle, wobei die maschinell ausführbaren Befehle einen Erhaltungsbefehl (312), ein ersten Bestimmungsbefehl (322), einen Sendebefehl, einen Wortsegmentierungsbefehl (332), einen Berechnungsbefehl (342), einen zweiten Bestimmungsbefehl (352), eine Trainingsbefehl (362) und einen Identifizierungsbefehl (372) umfassen; wobei

ein Prozessor (301) durch den Beschaffungsbefehl (312) veranlasst wird, eine Vielzahl von Beispiel-Webseitenanfragen zu beschaffen, die mit Tags markiert sind, wobei jedes Tag anzeigt, ob eine Webseitenanfrage eine bösartige Webseitenanfrage oder eine nicht-bösartige Webseitenanfrage ist;

der Prozessor (301) durch den ersten Bestimmungsbefehl (322) veranlasst wird, ein Strukturmerkmal jeder Beispiel-Webseitenanfrage zu bestimmen;

der Prozessor (301) durch den Wortsegmentierungsbefehl (332) veranlasst wird, die Textinformationen jeder Beispiel-Webseitenanfrage zu segmentieren, um Textwörter zu erhalten;

der Prozessor (301) durch den Berechnungsbefehl (342) veranlasst wird, eine Gewichtung jedes Textworts jeder Beispiel-Webseitenanfrage zu berechnen;

der Prozessor (301) durch den zweiten Bestimmungsbefehl (352) veranlasst wird, für jede Beispiel-Webseitenanfrage einen Merkmalsvektor dieser Beispiel-Webseitenanfrage gemäß dem Strukturmerkmal dieser Beispiel-Webseitenanfrage und der Gewichtung jedes Textwortes dieser Beispiel-Webseitenanfrage zu bestimmen;

der Prozessor (301) durch den Trainingsbefehl (362) veranlasst, ein Webseitenanfrage-Identifizierungsmodell gemäß dem Merkmalsvektor jeder Beispiel-Webseitenanfrage und dem Tag jeder Beispiel-Webseitenanfrage auf der Grundlage eines maschinellen Lernalgorithmus zu trainieren;

der Prozessor (301) durch den Identifizierungsbefehl (372) veranlasst wird, wenn eine zu identifizierende Webseitenanfrage erhalten wird, die zu identifizierende Webseitenanfrage unter Verwendung des Webseitenanfrage-Identifizierungsmodells zu identifizieren, um zu bestimmen, ob die zu identifizierende Webseitenanfrage eine bösartige Webseitenanfrage ist oder nicht, **dadurch gekennzeichnet, dass** der Prozessor (301) durch den Berechnungsbefehl (342) veranlasst wird:

für jedes Textwort jeder Beispiel-Webseitenanfrage eine inverse Dokumentenhäufigkeit, IDF, dieses Textworts nach der folgenden Formel zu bestimmen:

$$IDF=\log (M/m);$$

wobei M die Anzahl der Webseitenanfragen mit demselben Pfad wie ein Pfad dieser Beispiel-Webseitenanfrage in einem Korpus ist und m die Anzahl der Webseitenanfragen, die dieses Textwort im Korpus aufweisen; und Bestimmen einer Gewichtung $\delta$ dieses Textworts gemäß der folgenden Formel:

$$\delta=TF*IDF;$$

wobei TF die Anzahl der Vorkommen dieses Textworts in den Textwörtern dieser Beispiel-Webseitenanfrage ist.

wobei für jedes Textwort im Korpus eine Indexnummer festgelegt wird, die Indexnummern aller Textwörter die gleiche Form haben und die Indexnummer eines Textworts sich von den Indexnummern der anderen Textwörter unterscheidet,

wobei die Anzahl m der Webseitenanfragen, die das Textwort im Korpus aufweisen, auf folgende Weise bestimmt wird: Bestimmen einer Indexnummer für jedes Textwort der Beispiel-Webseitenanfrage; für jedes Textwort der Beispiel-Webseitenanfrage, Suchen nach einer Webseitenanfrage, die die Indexnummer dieses Textwortes im Korpus aufweist, und Bestimmen der Anzahl der Webseitenanfragen, die die Indexnummer dieses Textwortes aufweisen, d.h. der Anzahl m der Webseitenanfragen, die dieses Textwort aufweisen.

**Revendications**

1. Procédé permettant d'identifier une demande de page web, le procédé comprenant :

l'obtention d'une pluralité de demandes de page web échantillons marquées avec des étiquettes (101), dans lequel chaque étiquette indique si une demande de page web est une demande de page web malveillante ou une demande de page web non malveillante ;

la détermination d'une caractéristique structurale de chaque demande de page web échantillon (102) ;

la segmentation d'informations textuelles de chaque demande de page web échantillon pour obtenir des mots de texte (103) ;

le calcul d'un poids de chaque mot de texte de chaque demande de page web échantillon (104) ;

pour chaque demande de page web échantillon, la détermination d'un vecteur caractéristique de cette demande de page web échantillon selon la caractéristique structurale de cette demande de page web échantillon et du poids de chaque mot de texte de cette demande de page web échantillon (105) ;

l'entraînement d'un modèle d'identification de demande de page web selon le vecteur caractéristique de chaque demande de page web échantillon et l'étiquette de chaque demande de page web échantillon, en fonction d'un algorithme d'apprentissage automatique (106) ; et

lorsqu'une demande de page web à identifier est obtenue, l'identification de la demande de page web à identifier en utilisant le modèle d'identification de demande de page web, pour déterminer si la demande de page web à identifier est une demande de page web malveillante ou non (107),

**caractérisé en ce que** le calcul d'un poids de chaque mot de texte de chaque demande de page web échantillon (104) comprend :

pour chaque mot de texte de chaque demande de page web échantillon, la détermination d'une fréquence de document inverse, IDF, de ce mot de texte selon la formule suivante :

$$IDF=\log (M/m) ;$$

dans lequel M est le nombre de demandes de page web avec le même chemin d'accès qu'un chemin d'accès de cette demande de page web échantillon dans un corpus, et m est le nombre de demandes de page web comportant ce mot de texte dans le corpus ; et

la détermination d'un poids $\delta$ de ce mot de texte selon la formule suivante :

$$\delta=TF*IDF ;$$

dans lequel TF est le nombre d'occurrences de ce mot de texte dans des mots de texte de cette demande de page web échantillon, dans lequel un numéro d'indice est défini pour chaque mot de texte dans le corpus, les numéros d'indice de tous les mots de texte ont la même forme, et le numéro d'indice d'un mot de texte est différent des numéros d'indice d'autres mots de texte, dans lequel le nombre m de demandes de page web comportant le mot de texte dans le corpus est déterminé de la manière suivante : la détermination d'un numéro d'indice de chaque mot de texte de la demande de page web échantillon ; pour chaque mot de texte de la demande de page web échantillon, la recherche d'une demande de page web comportant le numéro d'indice de ce mot de texte dans le corpus, et la détermination du nombre de demandes de page web comportant le numéro d'indice de ce mot de texte, c'est-à-dire, le nombre m de demandes de page web comportant ce mot de texte.

2. Procédé selon la revendication 1, dans lequel la détermination d'une caractéristique structurale de chaque demande de page web échantillon (102) comprend :
la détermination de la caractéristique structurale de chaque demande de page web échantillon selon le nombre de paramètres, une longueur moyenne de valeurs de paramètre et le nombre de paramètres illégaux dans cette demande de page web échantillon.

3. Procédé selon la revendication 1, dans lequel la segmentation des informations textuelles de chaque demande de page web échantillon pour obtenir des mots de texte (103) comprend :
la segmentation des informations textuelles de chaque demande de page web échantillon en utilisant des séparateurs d'une demande de page web, pour obtenir les mots de texte.

4. Procédé selon la revendication 1, dans lequel l'entraînement d'un modèle d'identification de demande de page web selon le vecteur caractéristique de chaque demande de page web échantillon et l'étiquette de chaque demande de page web échantillon, en fonction d'un algorithme d'apprentissage automatique (106) comprend :
en fonction d'un algorithme de machine à vecteur de support et d'un algorithme de descente de gradient stochastique, l'entraînement du modèle d'identification de demande de page web selon le vecteur caractéristique de chaque demande de page web échantillon et l'étiquette de chaque demande de page web échantillon.

5. Appareil permettant d'identifier une demande de page web, l'appareil comprenant :

une unité d'obtention (201) pour obtenir une pluralité de demandes de page web échantillons marquées avec des étiquettes, dans lequel chaque étiquette indique si une demande de page web est une demande de page web malveillante ou une demande de page web non malveillante ;
une première unité de détermination (202) pour déterminer une caractéristique structurale de chaque demande de page web échantillon ;
une unité de segmentation de mots (203) pour segmenter des informations textuelles de chaque demande de page web échantillon pour obtenir des mots de texte ;
une unité de calcul (204) pour calculer un poids de chaque mot de texte de chaque demande de page web échantillon ;
une seconde unité de détermination (205) pour déterminer, pour chaque demande de page web échantillon, un vecteur caractéristique de cette demande de page web échantillon selon la caractéristique structurale de cette demande de page web échantillon et du poids de chaque mot de texte de cette demande de page web échantillon ;
une unité d'entraînement (206) pour entraîner un modèle d'identification de demande de page web selon le vecteur caractéristique de chaque demande de page web échantillon et l'étiquette de chaque demande de page web échantillon, en fonction d'un algorithme d'apprentissage automatique ; et
une unité d'identification (207) pour identifier, lorsqu'une demande de page web à identifier est obtenue, la demande de page web à identifier en utilisant le modèle d'identification de demande de page web, pour déterminer si la demande de page web à identifier est une demande de page web malveillante ou non,
**caractérisé en ce que** l'unité de calcul (204) permet pour chaque mot de texte de chaque demande de page web échantillon, de déterminer une fréquence de document inverse, IDF, de ce mot de texte selon la formule suivante :

$$IDF = \log(M/m) \; ;$$

dans lequel M est le nombre de demandes de page web avec le même chemin d'accès qu'un chemin d'accès de cette demande de page web échantillon dans un corpus, et m est le nombre de demandes de page web comportant ce mot de texte dans le corpus ; et

déterminer un poids δ de ce mot de texte selon la formule suivante :

$$\delta = TF*IDF \;;$$

dans lequel TF est le nombre d'occurrences de ce mot de texte dans des mots de texte de cette demande de page web échantillon,

dans lequel un numéro d'indice est défini pour chaque mot de texte dans le corpus, les numéros d'indice de tous les mots de texte ont la même forme, et le numéro d'indice d'un mot de texte est différent des numéros d'indice d'autres mots de texte,

dans lequel le nombre m de demandes de page web comportant le mot de texte dans le corpus est déterminé de la manière suivante : la détermination d'un numéro d'indice de chaque mot de texte de la demande de page web échantillon ; pour chaque mot de texte de la demande de page web échantillon, la recherche d'une demande de page web comportant le numéro d'indice de ce mot de texte dans le corpus, et la détermination du nombre de demandes de page web comportant le numéro d'indice de ce mot de texte, c'est-à-dire, le nombre m de demandes de page web comportant ce mot de texte.

6. Appareil selon la revendication 5, dans lequel la première unité de détermination (202) permet de déterminer la caractéristique structurale de chaque demande de page web échantillon selon le nombre de paramètres, une longueur moyenne de valeurs de paramètre et le nombre de paramètres illégaux dans cette demande de page web échantillon.

7. Appareil selon la revendication 5, dans lequel l'unité de segmentation de mots (203) permet de segmenter les informations textuelles de chaque demande de page web échantillon en utilisant des séparateurs d'une demande de page web, pour obtenir les mots de texte.

8. Support de stockage lisible par machine (302) stockant des instructions exécutables par machine, les instructions exécutables par machine comprenant une instruction d'obtention (312), une première instruction de détermination (322), une instruction d'envoi, une instruction de segmentation de mots (332), une instruction de calcul (342), une seconde instruction de détermination (352), une instruction d'entraînement (362) et une instruction d'identification (372), dans lequel

lorsqu'elle est appelée et exécutée par un processeur (301), l'instruction d'obtention (312) amène le processeur (301) à obtenir une pluralité de demandes de page web échantillons marquées avec des étiquettes, dans lequel chaque étiquette indique si une demande de page web est une demande de page web malveillante ou une demande de page web non malveillante ;

lorsqu'elle est appelée et exécutée par le processeur (301), la première instruction de détermination (322) amène le processeur (301) à déterminer une caractéristique structurale de chaque demande de page web échantillon ;

lorsqu'elle est appelée et exécutée par le processeur (301), l'instruction de segmentation de mots (332) amène le processeur (301) à segmenter des informations textuelles de chaque demande de page web échantillon pour obtenir des mots de texte ;

lorsqu'elle est appelée et exécutée par le processeur (301), l'instruction de calcul (342) amène le processeur (301) à calculer un poids de chaque mot de texte de chaque demande de page web échantillon ;

lorsqu'elle est appelée et exécutée par le processeur (301), la seconde instruction de détermination (352) amène le processeur (301) à déterminer, pour chaque demande de page web échantillon, un vecteur caractéristique de cette demande de page web échantillon selon la caractéristique structurale de cette demande de page web échantillon et le poids de chaque mot de texte de cette demande de page web échantillon ;

lorsqu'elle est appelée et exécutée par le processeur (301), l'instruction d'entraînement amène (362) le processeur (301) à entraîner un modèle d'identification de demande de page web selon le vecteur caractéristique de chaque demande de page web échantillon et l'étiquette de chaque demande de page web échantillon, en fonction d'un algorithme d'apprentissage automatique ;

lorsqu'elle est appelée et exécutée par le processeur (301), l'instruction d'identification (372) amène le processeur (301) à identifier, lorsqu'une demande de page web à identifier est obtenue, la demande de page web à identifier en utilisant le modèle d'identification de demande de page web, pour déterminer si la demande de page web à identifier est une demande de page web malveillante ou non,

**caractérisé en ce que** lorsqu'elle est appelée et exécutée par le processeur (301), l'instruction de calcul (342) amène le processeur (301) à pour chaque mot de texte de chaque demande de page web échantillon, déterminer une fréquence de document inverse, IDF, de ce mot de texte selon la formule suivante :

$$IDF=\log (M/m) \text{ ;}$$

dans lequel M est le nombre de demandes de page web avec le même chemin d'accès qu'un chemin d'accès de cette demande de page web échantillon dans un corpus, et m est le nombre de demandes de page web comportant ce mot de texte dans le corpus ; et

déterminer un poids δ de ce mot de texte selon la formule suivante :

$$\delta=TF*IDF \text{ ;}$$

dans lequel TF est le nombre d'occurrences de ce mot de texte dans des mots de texte de cette demande de page web échantillon,

dans lequel un numéro d'indice est défini pour chaque mot de texte dans le corpus, les numéros d'indice de tous les mots de texte ont la même forme, et le numéro d'indice d'un mot de texte est différent des numéros d'indice d'autres mots de texte,

dans lequel le nombre m de demandes de page web comportant le mot de texte dans le corpus est déterminé de la manière suivante : la détermination d'un numéro d'indice de chaque mot de texte de la demande de page web échantillon ; pour chaque mot de texte de la demande de page web échantillon, la recherche d'une demande de page web comportant le numéro d'indice de ce mot de texte dans le corpus, et la détermination du nombre de demandes de page web comportant le numéro d'indice de ce mot de texte, c'est-à-dire, le nombre m de demandes de page web comportant ce mot de texte.

9. Instructions exécutables par machine, les instructions exécutables par une machine comprennent une instruction d'obtention (312), une première instruction de détermination (322), une instruction d'envoi, une instruction de segmentation de mots (332), une instruction de calcul (342), une seconde instruction de détermination (352), une instruction d'entraînement (362) et une instruction d'identification (372) ; dans lesquelles

un processeur (301) est amené par l'instruction d'obtention (312) à obtenir une pluralité de demandes de page web échantillons marquées avec des étiquettes, dans lesquelles chaque étiquette indique si une demande de page web est une demande de page web malveillante ou une demande de page web non malveillante ;

le processeur (301) est amené par la première instruction de détermination (322) à déterminer une caractéristique structurale de chaque demande de page web échantillon ;

le processeur (301) est amené par l'instruction de segmentation de mots (332) à segmenter des informations textuelles de chaque demande de page web échantillon pour obtenir des mots de texte ;

le processeur (301) est amené par l'instruction de calcul (342) à calculer un poids de chaque mot de texte de chaque demande de page web échantillon ;

le processeur (301) est amené par la seconde instruction de détermination (352) à déterminer, pour chaque demande de page web échantillon, un vecteur caractéristique de cette demande de page web échantillon selon la caractéristique structurale de cette demande de page web échantillon et le poids de chaque mot de texte de cette demande de page web échantillon ;

le processeur (301) est amené par l'instruction d'entraînement (362) à entraîner un modèle d'identification de demande de page web selon le vecteur caractéristique de chaque demande de page web échantillon et l'étiquette de chaque demande de page web échantillon, en fonction d'un algorithme d'apprentissage automatique ;

le processeur (301) est amené par l'instruction d'identification (372) à identifier, lorsqu'une demande de page web à identifier est obtenue, la demande de page web à identifier en utilisant le modèle d'identification de demande de page web, pour déterminer si la demande de page web à identifier est une demande de page web malveillante ou non,

**caractérisées en ce que** le processeur (301) est amené par l'instruction de calcul (342) à :

pour chaque mot de texte de chaque demande de page web échantillon, déterminer une fréquence de document inverse, IDF, de ce mot de texte selon la formule suivante :

$$IDF=\log (M/m) \text{ ;}$$

dans lesquelles M est le nombre de demandes de page web avec le même chemin d'accès qu'un chemin d'accès de cette demande de page web échantillon dans un corpus, et m est le nombre de demandes de page web comportant ce mot de texte dans le corpus ; et

déterminer un poids δ de ce mot de texte selon la formule suivante :

$$\delta=TF*IDF \text{ ;}$$

dans lesquelles TF est le nombre d'occurrences de ce mot de texte dans des mots de texte de cette demande de page web échantillon,

dans lesquelles un numéro d'indice est défini pour chaque mot de texte dans le corpus, les numéros d'indice de tous les mots de texte ont la même forme et le numéro d'indice d'un mot de texte est différent des numéros d'indice d'autres mots de texte,

dans lesquelles le nombre m de demandes de page web comportant le mot de texte dans le corpus est déterminé de la manière suivante : la détermination d'un numéro d'indice de chaque mot de texte de la demande de page web échantillon ; pour chaque mot de texte de la demande de page web échantillon, la recherche d'une demande de page web comportant le numéro d'indice de ce mot de texte dans le corpus, et la détermination du nombre de demandes de page web comportant le numéro d'indice de ce mot de texte, c'est-à-dire, le nombre m de demandes de page web comportant ce mot de texte.

a plurality of sample web page requests marked
with tags are obtained; wherein each tag is a tag
indicating that a web page request is a malicious
web page request or a tag indicating that a web
page request is a non-malicious web page request

101

102

a structural feature of each sample web page
request is determined

103

the text information of each sample web page
request is segmented to obtain text words of
each sample web page request

104

a weight of each text word of each sample web
page request is calculated

105

for each sample web page request, a feature vector
of this sample web page request is determined
according to the structural feature of this sample
web page request and the weight of each text word
of this sample web page request

106

a web page request identification model is trained
according to the feature vector of each sample web
page request and the tag of each sample web page
request, based on a machine learning algorithm

107

when a web page request to be identified is
obtained, the web page request to be identified is
identified by using the web page request
recognition model, to determine whether the web
page request to be identified is a malicious web
page request or not

Fig.1

EP 3 703 329 B1

Fig.2

Fig.3

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105956472 A
- CN 103309862 A

- CN 106685936 A

**Non-patent literature cited in the description**

- Towards Designing a Multipurpose Cybercrime Intelligence Framework. **NOUH MARIAM et al.** 2016 EUROPEAN INTELLIGENCE AND SECURITY INFORMATICS CONFERENCE (EISIC). IEEE, 17 August 2016, 60-67